# EUROPEAN PATENT SPECIFICATION

(11) **EP 3 229 365 B1**
(45) Date of publication and mention of the grant of the patent: **30.01.2019**
(21) Application number: 16305393.7
(22) Date of filing: 05.04.2016
(51) Int. Cl.: H02P 7/281, H02P 7/298, H02P 7/03, H02P 5/68, B60L 9/02

(54) **CONTROL DEVICE FOR CONTROLLING AT LEAST TWO DC-MACHINES OF A RAILWAY VEHICLE**
STEUERUNGSVORRICHTUNG ZUR STEUERUNG VON MINDESTENS EINER GLEICHSTROMMASCHINE EINES SCHIENENFAHRZEUGS
DISPOSITIF DE COMMANDE POUR COMMANDER AU MOINS UNE MACHINE DC D'UN VÉHICULE FERROVIAIRE

(43) Date of publication of application: 11.10.2017
(73) Proprietor: ALSTOM Transport Technologies, 93400 Saint-Ouen (FR)
(72) Inventor: BARLINI, Davide, 20151 Milano (IT); VACCA, Camillo, 20851 Lissone (IT)
(74) Representative: Lavoix

(56) References cited:
- DE-A1- 10 253 811
- US-A1- 2003 057 916
- US-A1- 2003 223 738
- US-A1- 2008 175 570
- US-B1- 7 126 293

## Description

The present invention relates to a control device adapted to control at least two DC-machines of a railway vehicle.

US 2008/175570 A1 discloses an apparatus for controlling a rotary DC machine in the two direction of possible rotation.

US 7 126 293 B1 discloses wheel slip correction systems for DC electric motor driven vehicles having multiple motors driving multiple wheels of the vehicle.

US 2003/223738 A1 discloses a solid state DC motor controller for controlling a motor speed based on the current and average voltage associated with the field and armature coils.

US 2003/057916 A1 discloses four-quadrant control of series, compound, and shunt wound direct current (DC) motors connected to a DC power source.

DE 102 53 811 A1 discloses a drive for displacement of vanes of windpower installation, whose vane impact angle to wind is adjustable by DC double shunt motor, possibly mechanical gearbox, at least one field rectifier, and at least single-phase inverter.

When refurbishing railway vehicles it is important to do so in a most economical way. For railway vehicles having a direct-current (DC) motor, it is in general not economic to exchange the DC-motor with, for example, an equivalent alternating-current (AC) induction motor. In this case, classically at least a control device configured for controlling the DC-motor is improved in performance and reliability.

Therefore, when revamping the control device, in general, only a system of resistors and switches which are used for voltage regulation of the DC-motor are exchanged by a modern step down chopper equipped with power electronic devices.

However, this classical way of revamping the control device of a railway vehicle does not provide full satisfaction.

Indeed, the control device comprises current-reverse switches located between an armature winding and a field winding in order to reverse the direction of rotation of the armature of the DC-motor. These switches constitute a source of malfunctioning for the control device. The maintenance costs are therefore increased.

Furthermore, when several DC-motors are on board the railway vehicle, the classical revamping solution allows no individual control of each DC-motor.

Also, when the DC-motor is running in a braking mode, the classical revamping solution requires an external circuit to inject a current into the field winding of the DC-motor.

Accordingly, it is an object of the present invention to overcome the drawbacks of the prior art and to provide a control device that is reliable, polyvalent and economic.

According to an aspect of the invention, a control device for controlling at least two DC-machines of a railway vehicle is provided, each DC-machine having a field winding and an armature winding, the control device comprising:
- a voltage supply circuit having a first supply circuit terminal adapted to be electrically connected to an electrical DC power source, a second supply circuit terminal adapted to be connected to a ground potential, the voltage supply circuit being adapted to regulate an electrical power exchange between the electrical DC power source and the at least two DC-machines, the voltage supply circuit comprising:
- a common first switching module with
   - a first switch having a first switch terminal electrically connected to the first supply circuit terminal and a second switch terminal electrically connected to a third supply circuit terminal, and
   - a second switch having a first switch terminal electrically connected to the third supply circuit terminal and a second switch terminal electrically connected to the second supply circuit terminal; and
- for each DC-machine:
- at least one second switching module having
   - a first switch having a first switch terminal electrically connected to the first supply circuit terminal and a second switch terminal electrically connected to a fourth supply circuit terminal adapted to be connected to a first armature winding terminal of the armature winding of the respective DC-machine, and
   - a second switch having a first switch terminal electrically connected to the fourth supply circuit terminal and a second switch terminal electrically connected to the second supply circuit terminal, and
- for each DC-machine a current rectifying unit having two output terminals adapted to be connected to the field winding and two input terminals, a first input terminal being adapted to be electrically connected to a second armature winding terminal of the respective DC-machine and a second input terminal being adapted to be electrically connected to the third supply circuit terminal.

According to embodiments, the control device according to the invention allows increasing the reliability and simultaneously reducing the maintenance cost for a control device of a DC-machine.

The invention allows running the DC-machine in the braking mode without an additional control circuit for injecting a control current into the field winding.

According to some embodiments the elements used in a voltage supply circuit of the DC-machine have a more equilibrated duty cycle compared to elements used in a classical control device.

The invention has also the advantage that if two DC-machines have to be controlled by the control device, they can be independently controlled. This allows higher traction performance and higher braking performance compared to classical DC-machines.

According to preferred embodiments, the control device comprises one or more of the following features, taken in all technical possible combinations:
- each DC-machine is connected via a respective forth supply circuit terminal to a respective switching module;
- the rectifying unit is adapted to rectify a current applied to the two input terminals;
- the current rectifying unit comprises a diode-bridge-rectifier having each four
   diodes;
- a power switch is configured to connect the direct voltage power source with the
   voltage supply circuit;
- a field switch and a resistor connected in serial to the field switch, are connected
   electrically in parallel to the field winding;
- the first and second switch of the first switching module and/or the first and second switch of the at least one second switching module are semiconductor switches, in particular insulated-gate bipolar transistors;
- the first and second switching modules are formed by a three phase inverter
   module;
- the DC machines are traction machines of a railway vehicle; and
- a control unit is adapted to control the first and second switches of the first and second switching modules, in particular to operate at least one of the DC-machines in a first rotational direction and a second rotational direction opposite to the first rotational direction.

The invention further relates to a method for operating the control device comprising the steps of:
- closing the first switch of the at least one second switching module and the second switch of the first switching module by a control unit, and
- opening the second switch of the at least one second switching module and the first switch of the first switching module by a control unit for operating at least one of the DC-machines in a first rotational direction,
- closing the second switch of the at least one second switching module and a first switch of the first switching module by a control unit, and
- opening the first switch of the at least one second switching module and the second switch of the first switching module by a control unit for operating at least one of the DC-machines in a second rotational direction, the second rotational direction being opposite to the first rotational direction.

The invention also concerns a railway vehicle comprising a control device according to an embodiment disclosed herein comprising at least one DC-machine connected to the control device. The invention will now be described in detail with reference to the drawing, wherein:

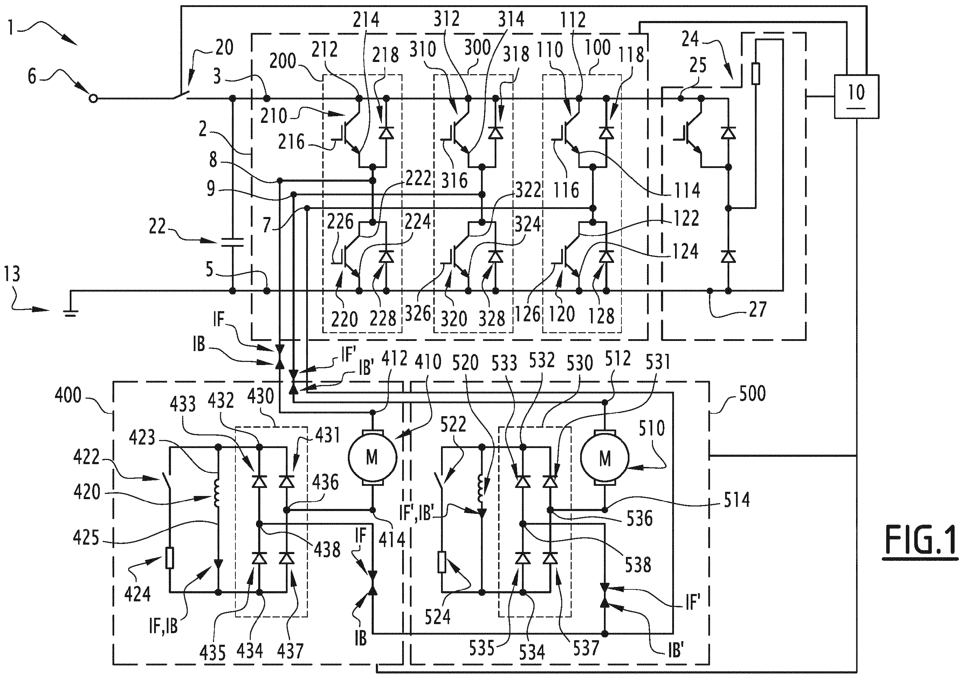

- Figure 1 represents a control device according to an embodiment of the invention.

The control device 1 comprises a voltage supply circuit 2 and is adapted to control at least two DC-machines 400, 500. In the embodiment of figure 1, two DC-machines are shown.

The voltage supply circuit 2 has a first supply circuit terminal 3 adapted to be electrically connected to a DC power source 6 supplying the voltage supply circuit 2 with electrical power. The voltage supply circuit 2 has a second supply circuit terminal 5 adapted to be electrically connected to a ground potential 13. The ground potential 13 can also be a potential different than 0V.

The voltage supply circuit 2 is adapted to regulate an electrical power exchanged between the electrical DC power source 6 and the DC-machines 400, 500. The voltage supply circuit 2 can also regulate an electrical power exchanged with the electrical DC power source 6 to move the two DC-machines, or only one DC-machine.

The voltage supply circuit 2 comprises a first switching module 100, a second switching module 200 and optionally a third switching module 300, each having an identical structure. The function of the third switching module 300 is identical to the second switching module, whereas the second switching module 200 is connected to the first DC-machine 400, and the third switching module 300 is connected to the second DC-machine 500. However to better distinguish the two switching modules 200,300 they are named in the description below second and third switching modules. However, they may be also considered as two "second" switching modules.

In order to simplify matters, only the elements of the first switching module 100 are described in detail in the following description. However, the description given for the elements of the first switching module 100 correspond also to the elements of the second switching module 200 and to the elements of the third switching module 300. The elements of the second switching module 200 have the same reference numbers as the first switching module increased by 100. The elements of the third switching module 300 have the same reference numbers as the first switching module increased by 200. The first switching module 100 and the second switching module 200 can be each three phase inverter. A three phase inverter may be used for the three switching modules 100, 200, 300.

The first switching module 100 comprises a first switch 110 and a second switch 120 connected in series. The first switch 110 and the second switch 120 are controlled by a control unit 10.

The first switch 110 has a first switch terminal 112 which is electrically connected to the first supply circuit terminal 3 and a second switch terminal 114 which is electrically connected to a third supply circuit terminal 7. The third supply circuit terminal 7 is electrically connected to the DC-machine 400 which will be described later in more detail.

The first switch 110 has a switch actuator 116 allowing to open or to close the first switch 110. The switch actuator 116 is electrically connected to the control unit 10. The control unit 10 controls the first switch 110 via the switch actuator 116 in order to open or to close the first switch 110.

The second switch 120 has a first switch terminal 122 which is electrically connected to the third supply circuit terminal 7. The second switch 120 has a second switch terminal 124 which is electrically connected to the second supply circuit terminal 5.

The second switch 120 has a switch actuator 126 allowing to open or to close the second switch 120. The switch actuator 126 is electrically connected to the control unit 10. The control unit 10 controls the second switch 120 via the switch actuator 126 in order to open or to close the second switch 120.

The first and second switches 110 and 120 cannot conduct an electric current when they are open. The first and second switches 110 and 120 can conduct an electric current when they are closed.

In an embodiment the first and second switches 110 and 120 are transistors, for example insulated-gate bipolar transistors (IGBT).

The IGBT can be for example n-channel IGBTs.

In the case the first and second switches 110, 120 are IGBTs, the first switch terminal 112, 122 of the switches 110, 120 are formed by the collector of the IGBT and second switch terminals 114, 124 are formed by the emitter of the IGBT. In this case, the switch actuators 116, 126 are formed by the gates of the IGBT.

A first diode 118 is connected in parallel to the first switch 110.

A cathode of the first diode 118 is electrically connected to the first switch terminal 112 of the first switch 110, and an anode of the first diode 118 is electrically connected to the second switch terminal 114 of the first switch 110.

The first diode 118 allows carrying the current when first switch 110 is closed and the DC-machines 400,500 are controlled in the braking mode.

A second diode 128 is connected in parallel to the second switch 120.

A cathode of the second diode 128 is electrically connected to the first switch terminal 122 of the second switch 120, and an anode of the second diode 128 is electrically connected to the second switch terminal 124 of the second switch 120.

The second diode 128 allows carrying the current when first switch 120 is closed and the DC-machines are controlled in the braking mode.

The differences between the first, second and third switching modules 100, 200, 300 are described now.

The first switch 210 of the second switching module 200 has a second switch terminal 214 which is electrically connected a fourth supply circuit terminal 8.

The second switch 220 of the second switching module 200 has a first switch terminal 222 which is also electrically connected to the fourth supply circuit terminal 8.

The fourth supply circuit terminal 8 is electrically connected to the DC-machine 400 which will be described later in more detail.

The first switch 310 of the third switching module 300 has a second switch terminal 314 which is electrically connected a fifth supply circuit terminal 9.

The second switch 320 of the third switching module 300 has a first switch terminal 322 which is electrically connected to the fifth supply circuit terminal 9.

The control device 1 further comprises a power switch 20 connected between the DC power source 6 and the first supply terminal 3 of the voltage supply circuit 2. The power switch 20 has an opened state and a closed state. The opened state allows electrical disconnection of the voltage supply circuit 2 from the DC power source 6. The closed state allows electrical connection of the voltage supply circuit 2 with the DC power source 6.

The power switch 20 is controlled by the control unit 10. The power switch 20 is normally in the closed state. The power switch 20 is only put in the opened state when a voltage circuit isolation from the DC power source is required.

The control device 1 further comprises a capacitor 22 connected with a first end between the power switch 20 and the first supply terminal 3, and connected with a second end to the ground potential 13.

The capacitor is configured to reduce voltage variations of the voltage provided by the DC power source 6. The capacitor has a capacitance which is chosen in order to reduce the voltage variations such that they are compatible with the IGBTs voltage requirements.

The control device 1 also comprises a supplemental regulation unit 24 having a first terminal 25 electrically connected to the first supply circuit terminal 3 of the voltage supply circuit 2 and having a second terminal 27 electrically connected to the second supply circuit terminal 5. The supplemental regulation unit 24 is electrically connected to the control unit 10. The control unit 10 controls the supplemental regulation unit 24.

The supplemental regulation unit 24 allows dissipating braking power when DC motors are controlled in the braking mode and the DC power supply is not regenerative.

The voltage supply circuit 2 is electrically connected to the DC-machines 400, 500. The control unit 10 allows controlling of the DC-machine 400, for example via the first and second switches of the switching modules 100, 200, and the controlling of the DC-machine 500, for example via the first and second switches of the switching modules 100, 300.

The DC-machine 400 comprises an armature winding 410 mechanically connected with an armature (not shown) and a field winding 420, also called field winding, mechanically connected with a stator 421.

The armature winding 410 and the field winding 420 are electrically connected to a current rectifying unit 430.

The DC-machine 400 allows conversion of electrical energy to mechanical energy. The armature is rotated in speed and direction depending on an electrical current exciting the armature winding 410 and field winding 420. The DC-machine 400 can be a traction machine for propelling the railway vehicle.

The armature winding 410 comprises a first connection terminal 412 connected to the fourth supply circuit terminal 8 of the voltage supply circuit 2. The armature winding 410 also comprises a second connection terminal 414 connected to the current rectifying unit 430.

The current rectifying unit 430 is for example a diode-bridge-rectifier comprising four diodes.

The current rectifying unit 430 comprises a first input terminal 436 electrically connected to the second connection terminal 414 of the armature winding 410.

The current rectifying unit 430 comprises a second input terminal 438 electrically connected to the third supply circuit terminal 7 of the voltage supply circuit 2.

The current rectifying unit 430 comprises a first output terminal 432 and a second output terminal 434.

The current rectifying unit 430 comprises a first rectifying diode 431, a second rectifying diode 433, a third rectifying diode 435 and a fourth rectifying diode 437.

The first rectifying diode 431 is electrically connected with a first terminal to the first input terminal 436 and with a second terminal to the first output terminal 432.

The second rectifying diode 433 is electrically connected with a first terminal to the second input terminal 438 and with a second terminal to the first output terminal 432.

The third rectifying diode 435 is electrically connected with a first terminal to the second output terminal 434 and with a second terminal to the second input terminal 438.

The fourth rectifying diode 437 is electrically connected with a first terminal to the second output terminal 434 and with a second terminal to the first input terminal 436.

The first terminals of the first, second, third and fourth rectifying diodes 431, 433, 435 and 437 are the anodes of these diodes, and the second terminals are the cathodes of these diodes.

The current rectifying unit 430 is configured to rectify an electrical current applied on the first or second input terminal 436, 438 in order to output a rectified electrical current at the first output terminal 432 of the current rectifying unit 430.

The rectifying unit 430 allows increasing the reliability of the control device 1 compared to known control devices using a non-rectified current for exciting the field winding 420.

The field winding 420 comprises a first excitation terminal 423 which is electrically connected to the first output terminal 432.

The field winding 420 comprises a second excitation terminal 425 which is electrically connected to the second output terminal 434.

A field switch 422 is electrically connected in serial to a field resistor 424. The field resistor 424 has a resistance chosen in order to allow the operation of DC-machine in a field weakening mode.

The field switch 422 and the field resistor 424 are electrically connected in parallel to the field winding 420.

The field switch 422 has an opened state and a closed state. In the closed state an electric current can run through the field switch 422.

The field switch 422 is controlled by the control unit 10.

In the forward traction mode and backward traction mode, the field switch 422 is in its open state when the DC-machine runs at low speed.

The field switch 422 allows in combination with the field resistor 424 to reduce the field operating in the field weakening mode.

In the forward traction mode and backward traction mode, the field switch 422 is put in its closed state when the DC-machines have to operate in the field weakening mode in order to run at high speed.

The operation of the control device 1 is described now.

In this description, the term "flow" refers to an electric current flow according to a direction defined by the conventional electric current.

It has to be mentioned that for the second DC-machine 500, and in particular a second rectifying unit 530 of the DC-machine 500, the same features as in the DC-machine 400 are used and therefore designated with the same reference number increased by 100.

The control device 1 allows controlling the DC-machine 400 in a forward traction mode. A forward traction mode means that the armature winding 410 is excited by an electrical current in order to rotate the armature in a first rotational direction.

The control device 1 also allows controlling the DC-machine 400 in a backward traction mode. A backward traction mode means that the armature winding 410 is excited by an electrical current in order to rotate the armature in a second rotational direction opposite to the first rotational direction.

In the forward traction mode and backward traction mode, the control unit 10 controls the power switch 20 in order to be in its closed state. In the forward traction mode, the control unit 10 controls the voltage supply circuit 2 such that the first switch 210 of the second switching module 200 is closed when the second switch 220 of the second switching module 200 is opened. The first switch 210 and second switch 220 are controlled according a duty cycle, which allows of regulating a first excitation current IF value.

Simultaneously, the control unit 10 controls the voltage supply circuit 2 such that the first switch 110 of the first switching module 100 is opened and the second switch 120 of the first switching module 100 is closed.

This allows that a first excitation current IF flows from the DC power source 6 through the first switch 210 of the second switching module 200, through the fourth supply circuit terminal 8, through the armature winding 410 to the first input terminal 436 of the current rectifying unit 430 of the DC-machine 400.

Then, the first excitation current IF is rectified in the current rectifying unit 430.

In the current rectifying unit 430, the first excitation current IF flows from the first input terminal 436 through the first rectifying diode 431 to the first output terminal 432.

Then, the first excitation current IF flows through the filed windings 420, through the third rectifying diode 435 and to the second input terminal 438 of the current rectifying unit 430.

From the second input terminal 438 of the current rectifying unit 430, the first excitation current IF flows to the third supply circuit terminal 7, through the second switch 120 of the first switching module 100 and to the ground potential 13.

This allows the DC-machine 400 to rotate the armature and applying a positive torque in a first rotational direction in order to propel the railway vehicle in a forward direction.

In the backward traction mode, the control unit 10 controls the voltage supply circuit 2 such that the second switch 220 of the second switching module 200 is closed when the first switch 210 of the second switching module 200 is opened. The first switch 210 and second switch 220 are controlled according a duty cycle, which allows of regulating a second excitation current IB value.

Simultaneously, the control unit 10 controls the voltage supply circuit 2 such that the second switch 120 of the first switching module 100 is opened and the first switch 110 of the first switching module 100 is closed.

This allows that the second excitation current IB flows from the DC power source 6 through the first switch 110 of the first switching module 100, through the third supply circuit terminal 7, to the second input terminal 438 of the current rectifying unit 430 of the DC-machine 400.

Then, the second excitation current IB is rectified in the current rectifying unit 430.

In the current rectifying unit 430, the second excitation current IB flows from the second input terminal 438 through the second rectifying diode 433 to the first output terminal 432.

Then, the second excitation current IB flows through the field windings 420, through the fourth rectifying diode 437 and to the first input terminal 436 of the current rectifying unit 430.

From the first input terminal 436 of the current rectifying unit 430 the second excitation current IB flows to the fourth supply circuit terminal 8, through the second switch 220 of the second switching module 200 and to the ground potential 13.

This allows the DC-machine 400 to rotate the armature applying a positive torque in the second rotational direction in order to propel the railway vehicle in a backward direction opposite to the forward direction.

The DC-machine 400 can also be used for braking the railway vehicle.

In a first braking mode, the control unit 10 controls the voltage supply circuit 2 such that the second switch 220 of the second switching module 200 is closed and the first switch 210 of the second switching module 200 is opened. The first switch 210 and second switch 220 are controlled according a duty cycle, which allows of regulating the second excitation current IB value.

Simultaneously, the control unit 10 controls the voltage supply circuit 2 such that the second switch 120 of the first switching module 100 is opened and the first switch 110 of the first switching module 100 is closed.

This allows that the second excitation current IB flows from the DC power source 6 through the first switch 110 of the first switching module 100 to the third supply circuit terminal 7, to the second input terminal 438 of the current rectifying unit 430 of the DC-machine 400.

Then, the second excitation current IB is rectified in the current rectifying unit 430.

In the current rectifying unit 430, the second excitation current IB flows from the second input terminal 438 through the second rectifying diode 433 to the first output terminal 432.

Then, the second excitation current IB flows through the field windings 420, through the fourth rectifying diode 437 and to the first input terminal 436 of the current rectifying unit 430.

From the first input terminal 436 of the current rectifying unit 430 the second excitation current IB flows to the fourth supply circuit terminal 8, through the second switch 220 of the second switching module 200 and to the ground potential 13.

This allows the DC-machine 400 to rotate the armature and applying a negative torque in the second rotational direction in order to brake the railway vehicle running in a forward direction.

In a second braking mode, the control unit 10 controls the voltage supply circuit 2 such that the first switch 210 of the second switching module 200 is closed and the second switch 220 of the second switching module 200 is opened. The first switch 210 and second switch 220 are controlled according a duty cycle, which allows of regulating the second excitation current IB value.

Simultaneously, the control unit 10 controls the voltage supply circuit 2 such that the first switch 110 of the first switching module 100 is opened and the second switch 120 of the first switching module 100 is closed.

This allows that the first excitation current IF flows from the DC power source 6 through the first switch 210 of the second switching module 200, through the fourth supply circuit terminal 8, through the armature winding 410 to the first input terminal 436 of the current rectifying unit 430 of the DC-machine 400.

Then, the first excitation current IF is rectified in the current rectifying unit 430.

In the current rectifying unit 430, the first excitation current IF flows from the first input terminal 436 through the first rectifying diode 431 to the first output terminal 432.

Then, the first excitation current IF flows through the filed windings 420, through the third rectifying diode 435 and to the second input terminal 438 of the current rectifying unit 430.

From the second input terminal 438 of the current rectifying unit 430, the first excitation current IF flows to the third supply circuit terminal 7, through the second switch 120 of the first switching module 100 and to the ground potential 13.

This allows the DC-machine 400 to rotate the armature and applying a negaitive torque in a first rotational direction in order to brake the railway vehicle running in the backward direction.

The first excitation current IF and the second excitation current IB can be individually controlled via the switches 110, 120, 210, 220 of the voltage supply circuit 2 by the control unit 10. For example, the duty cycle of each switch 110, 120, 210, 220 can be predefined by the control unit 10.

This allows an individual traction power control for each of the DC-machines 400, 500.

The differences between the DC-machine 400 and the second DC-machine 500 are described now.

In an alternative embodiment of the invention, compatible with the above described embodiment, only one DC-machine 400, 500 is controlled by the control device 1.

A first connection terminal 512 of an armature winding 510 of the second DC-machine 500 is electrically connected to the fifth supply circuit terminal 9.

The second DC-machine 500 can individually be controlled by the control unit 10.

The DC-machine 400 combined with the second DC-machine 500 allows providing more traction power for the railway vehicle compared to the traction power provided to the railway vehicle by only the DC-machine 400.

The control unit 10 controls the first switching unit 100 and the third switching unit 300 in order to control a first excitation current IF' and a second excitation current IB' providing electrical power to the second DC-machine 500.

The flow of the first excitation current IF' and the second excitation current IB' is identical to the earlier described currents IF and IB. It is evident that the currents IF' and IB' flow through the third switching module 300 instead of the second switching module 200.

The second DC-machine 500 can also be used for braking the railway vehicle.

In an alternative embodiment, both DC-machines 400, 500 are controlled simultaneously. Then only one second switching module is needed, for example the first switching module 100 and the second switching module 200.

Consequently, the second switch terminal 214 of the first switch 210 is then electrically connected to a fourth supply circuit terminal 8, which is identical to the fifth supply circuit terminal 9. In other words, the fourth supply circuit terminal 8 and the fifth supply circuit terminal 9 are connected together.

The invention is not limited to the above described embodiments.

## Claims

1. Control device (1) adapted to control at least two DC-machines (400, 500) of a railway vehicle, each DC-machine (400, 500) having a field winding (420) and an armature winding (410), the control device (1) comprising
- a voltage supply circuit (2) having a first supply circuit terminal (3) adapted to be electrically connected to an electrical DC power source (6), a second supply circuit terminal (5) adapted to be connected to a ground potential (13), the voltage supply circuit (2) being adapted to regulate an electrical power exchange between the electrical DC power source (6) and the at least two DC-machines (400, 500), the voltage supply circuit (2) comprising:
- a common first switching module (100) with
∘ a first switch (110) having a first switch terminal (112) electrically connected to the first supply circuit terminal (3) and a second switch terminal (114) electrically connected to a third supply circuit terminal (7), and
∘ a second switch (120) having a first switch terminal (122) electrically connected to the third supply circuit terminal (7) and a second switch terminal (124) electrically connected to the second supply circuit terminal (5); and
- for each DC-machine:
- at least one second switching module (200) having
∘a first switch (210) having a first switch terminal (212) electrically connected to the first supply circuit terminal (3) and a second switch terminal (214) electrically connected to a fourth supply circuit terminal (8, 9) adapted to be connected to a first armature winding terminal (412, 512) of the armature winding (410, 510) of the respective DC-machine (400, 500), and
∘a second switch (220) having a first switch terminal (222) electrically connected to the fourth supply circuit terminal (8 , 9) and a second switch terminal (224) electrically connected to the second supply circuit terminal (5), and
- for each DC-machine (400, 500) a current rectifying unit (430, 530) having two output terminals (432, 434 ; 532, 534) adapted to be connected to the field winding (420, 520, 520') and two input terminals (436, 438, 536, 538), a first input terminal (436, 536) being adapted to be electrically connected to a second armature winding terminal (414, 514) of the respective DC-machine and a second input terminal (438, 538) being adapted to be electrically connected to the third supply circuit terminal (7).

2. Control device according to claim 1, wherein each DC-machine (400, 500) is connected via a respective forth supply circuit terminal (8, 9) to a respective switching module (200, 300).

3. Control device according to any of claims 1 to 2, wherein the rectifying unit (430, 530) is adapted to rectify a current applied to the two input terminals (436, 438, 536, 538).

4. Control device according to claim 3, wherein the current rectifying unit (430, 530) comprises a diode-bridge-rectifier having each four diodes (431, 433, 435, 437, 531, 533, 535, 537).

5. Control device according to any of the previous claims, wherein a power switch (20) is configured to connect the direct voltage power source (6) with the voltage supply circuit (2).

6. Control device according to any of the previous claims, wherein a field switch (422, 522) and a resistor (424, 524) connected in serial to the field switch (422, 522), are connected electrically in parallel to the field winding (420, 520).

7. Control device according to any of the previous claims, wherein the first and second switch (110, 120) of the first switching module (100) and/or the first and second switch (210, 220) of the at least one second switching module (200) are semiconductor switches, in particular insulated-gate bipolar transistors.

8. Control device according to any of claims 1 to 7, wherein the first and second switching modules (100, 200) are formed by a three phase inverter module.

9. Control device according to any of the previous claims, wherein the DC-machines (400, 500) are traction machines of a railway vehicle.

10. Control device according to any of the previous claims, wherein a control unit (10) is adapted to control the first and second switches (110, 120, 210, 220) of the first and second switching modules (100, 200), in particular to operate at least one of the DC-machines (400, 500) in a first rotational direction and a second rotational direction opposite to the first rotational direction.

11. Method for operating a control device (1) according to any of the previous claims, wherein the method comprises the steps of:
- closing the first switch (210) of the at least one second switching module (200, 300),
and the second switch (120) of the first switching module (100) by a control unit (10), and
- opening the second switch (220) of the at least one second switching module (200, 300) and the first switch (110) of the first switching module (100) by a control unit (10)
for operating at least one of the DC-machines (400, 500) in a first rotational direction,
- closing the second switch (220) of the at least one second switching module (200, 300),
and a first switch (110) of the first switching module (100) by a control unit (10), and
- opening the first switch (210) of the at least one second switching module (200, 300) and the second switch (120) of the first switching module (100) by a control unit (10)
for operating the at least one of the DC-machines (400, 500) in a second rotational direction, the second rotational direction being opposite to the first rotational direction.

12. A railway vehicle comprising a control device (1) according to any of claims 1 to 10 comprising at least one DC-machine (400, 500) connected to the control device (1).

## Patentansprüche

1. Steuervorrichtung (1), eingerichtet zum Steuern von mindestens zwei Gleichstrommaschinen (400, 500) eines Schienenfahrzeugs, wobei jede Gleichstrommaschine (400, 500) eine Feldwicklung (420) und eine Läuferwicklung (410) hat, wobei die Steuervorrichtung (1) aufweist
- eine Spannungsversorgungsschaltung (2) einem ersten Versorgungsschaltungsanschluss (3), dazu eingerichtet, mit einer elektrischen Gleichstrom-Energiequelle (6) verbunden zu werden, einen zweiten Versorgungsschaltungsanschluss (5), dazu eingerichtet, mit einem Erdpotential (13) verbunden zu werden, wobei die Spannungsversorgungsschaltung (2) eingerichtet ist, einen Austausch elektrischer Energie zwischen der elektrischen Gleichstrom-Energiequelle (6) und den mindestens zwei Gleichstrom-Maschinen (400, 500) zu regeln, wobei die Spannungsversorgungsschaltung (2) aufweist:
- ein gemeinsames erstes Schaltmodul (100) mit
o einem ersten Schalter (110) mit einem ersten Schalteranschluss (112), der elektrisch mit dem ersten Versorgungsschaltungsanschluss (3) verbunden ist, und einem zweiten Schalteranschluss (114), der elektrisch mit einem dritten Versorgungsschaltungsanschluss (7) verbunden ist, und
∘ einem zweiten Schalter (120) mit einem ersten Schalteranschluss (122), der elektrisch mit dem dritten Versorgungsschaltungsanschluss (7) verbunden ist, und einem zweiten Schalteranschluss (124), der elektrisch mit dem zweiten Versorgungsschaltungsanschluss (5) verbunden ist; und
- für jede Gleichstrommaschine:
- mindestens ein zweites Schaltmodul (200) mit
∘ einem ersten Schalter (210) mit einem ersten Schalteranschluss (212), der elektrisch mit dem ersten Versorgungsschaltungsanschluss (3) verbunden ist, und einem zweiten Schalteranschluss (214), der elektrisch mit einem vierten Versorgungsschaltungsanschluss (8, 9) verbunden ist, der dazu eingerichtet ist, mit einem ersten **Läuferwicklungsanschluss** (412, 512) der Läuferwicklung (410, 510) der jeweiligen Gleichstrommaschine verbunden zu werden, und
∘ einem zweiten Schalter (220) mit einem ersten Schalteranschluss (222), der elektrisch mit dem vierten Versorgungsschaltungsanschluss (8, 9) verbunden ist, und einem zweiten Schalteranschluss (224), der elektrisch mit dem zweiten Versorgungsschaltungsanschluss (5) verbunden ist, und
- für jede Gleichstrommaschine (400, 500) eine Stromgleichrichteinheit (430, 530) mit zwei Ausgangsanschlüssen (432, 434; 532, 534), dazu eingerichtet, mit der Feldwicklung (420, 520, 520') verbunden zu werden, und zwei Eingangsanschlüssen (436, 438, 536, 538), wobei ein erster Eingangsanschluss (436, 536) eingerichtet ist, elektrisch mit einem zweiten Läuferwicklungsanschluss (414, 514) der jeweiligen Gleichstrommaschine verbunden zu werden, und ein zweiter Eingangsanschluss (438, 538) dazu eingerichtet ist, mit dem dritten Versorgungsschaltungsanschluss (7) verbunden zu werden.

2. Steuervorrichtung gemäß Anspruch 1, wobei jede Gleichstrommaschine (400, 500) über einen jeweiligen vierten Versorgungsschaltungsanschluss (8, 9) mit einem jeweiligen Schaltmodul (200, 300) verbunden ist.

3. Steuervorrichtung gemäß einem der Ansprüche 1 bis 2, wobei die Gleichrichteinheit (430, 530) eingerichtet ist, einen den zwei Eingangsanschlüssen (436, 438, 536, 538) zugeführten Strom gleichzurichten.

4. Steuervorrichtung gemäß Anspruch 3, wobei die Stromgleichrichteinheit (430, 530) einen Dioden-Brücken-Gleichrichter mit jeweils vier Dioden (431, 433, 435, 437, 531, 533, 535, 537) aufweist.

5. Steuervorrichtung gemäß einem der vorhergehenden Ansprüche, wobei ein Leistungsschalter (20) eingerichtet ist, die Gleichspannungsenergiequelle (6) mit der Spannungsversorgungsschaltung (2) zu verbinden.

6. Steuervorrichtung gemäß einem der vorhergehenden Ansprüche, wobei ein Feldschalter (422, 522) und ein in Serie zu dem Feldschalter (422, 522) geschalteter Widerstand (424, 524) elektrisch parallel zu der Feldwicklung (420, 520) geschaltet sind.

7. Steuervorrichtung gemäß einem der vorhergehenden Ansprüche, wobei der erste und der zweite Schalter (110, 120) des ersten Schaltmoduls (100) und/oder der erste und der zweite Schalter (210, 220) des mindestens einen zweiten Schaltmoduls (200) Halbleiterschalter sind, insbesondere Bipolartransistoren mit isoliertem Gate.

8. Steuervorrichtung gemäß einem der Ansprüche 1 bis 7, wobei das erste und das zweite Schaltmodul (100, 200) durch ein Dreiphasen-Wechselrichtermodul gebildet sind.

9. Steuervorrichtung gemäß einem der vorhergehenden Ansprüche, wobei die Gleichstrommaschinen (400, 500) Zugmaschinen eines Schienenfahrzeugs sind.

10. Steuervorrichtung gemäß einem der vorhergehenden Ansprüche, wobei eine Steuereinheit (10) eingerichtet ist, die ersten und zweiten Schalter (110, 120, 210, 220) des ersten und zweiten Schaltmoduls (100, 200) zu steuern, insbesondere zum Betreiben mindestens einer der Gleichstrommaschinen (400, 500) in einer ersten Drehrichtung und einer zweiten Drehrichtung entgegengesetzt zur ersten Drehrichtung.

11. Verfahren zum Betreiben einer Steuervorrichtung (1) gemäß einem der vorhergehenden Ansprüche, wobei das Verfahren die Schritte aufweist:
- Schließen des ersten Schalters (210) des mindestens einen zweiten Schaltmoduls (200, 300),
und des zweiten Schalters (120) des ersten Schaltmoduls (100) durch eine Steuereinheit (10) und
- Öffnen des zweiten Schalters (220) des mindestens einen zweiten Schaltmoduls (200, 300) und des ersten Schalters (110) des ersten Schaltmoduls (100) durch eine Steuereinheit (10)
zum Betreiben mindestens einer der Gleichstrommaschinen (400, 500) in einer ersten Drehrichtung,
- Schließen des zweiten Schalters (220) des mindestens einen zweiten Schaltmoduls (200, 300),
und eines ersten Schalters (110) des ersten Schaltmoduls (100) durch eine Steuereinheit (10), und
- Öffnen des ersten Schalters (210) des mindestens zweiten Schaltmoduls (200, 300) und des zweiten Schalters (120) des ersten Schaltmoduls (100) durch eine Steuereinheit (10)
zum Betreiben der mindestens einen Gleichstrommaschinen (400, 500) in einer zweiten Drehrichtung, wobei die zweite Drehrichtung entgegengesetzt zur ersten Drehrichtung ist.

12. Schienenfahrzeug aufweisend eine Steuervorrichtung (1) gemäß einem der Ansprüche 1 bis 10, aufweisend mindestens eine Gleichstrommaschine (400, 500), die mit der Steuervorrichtung (1) verbunden ist.

## Revendications

1. Dispositif de commande (1) conçu pour commander au moins deux machines continues (400, 500) d'un véhicule de chemin de fer, chaque machine continue (400, 500) comportant un enroulement inducteur (420) et un enroulement d'induit (410), le dispositif de commande (1) comprenant :
- un circuit d'alimentation en tension (2) ayant une première borne de circuit d'alimentation (3) conçue pour être connectée électriquement à une source électrique d'alimentation continue (6), une deuxième borne de circuit d'alimentation (5) conçue pour être connectée à un potentiel de masse (13), le circuit d'alimentation en tension (2) étant conçu pour réguler un échange de puissance électrique entre la source électrique d'alimentation continue (6) et lesdites au moins deux machines continues (400, 500), le circuit d'alimentation en tension (2) comprenant :
- un premier module de commutation commun (100) avec
. un premier commutateur (110) ayant une première borne de commutateur (112) connectée électriquement à la première borne de circuit d'alimentation (3) et une deuxième borne de commutateur (114) connectée électriquement à une troisième borne de circuit d'alimentation (7), et
. un deuxième commutateur (120) ayant une première borne de commutateur (122) connectée électriquement à la troisième borne de circuit d'alimentation (7) et une deuxième borne de commutateur (124) connectée électriquement à la deuxième borne de circuit d'alimentation (5) ; et
- pour chaque machine continue :
- au moins un deuxième module de commutation (200) comportant
. un premier commutateur (210) ayant une première borne de commutateur (212) connectée électriquement à la première borne de circuit d'alimentation (3) et une deuxième borne de commutateur (214) connectée électriquement à une quatrième borne de circuit d'alimentation (8, 9) conçue pour être connectée à une première borne d'enroulement d'induit (412, 512) de l'enroulement d'induit (410, 510) de la machine continue (400, 500) respective, et
. un deuxième commutateur (220) ayant une première borne de commutateur (222) connectée électriquement à la quatrième borne de circuit d'alimentation (8, 9) et une deuxième borne de commutateur (224) connectée électriquement à la deuxième borne de circuit d'alimentation (5), et
- pour chaque machine continue (400, 500), une unité de redressement de courant (430, 530) ayant deux bornes de sortie (432, 434 ; 532, 534) conçues pour être connectées à l'enroulement inducteur (420, 520, 520') et deux bornes d'entrée (436, 438, 536, 538), une première borne d'entrée (436, 536) étant conçue pour être connectée électriquement à une deuxième borne d'enroulement d'induit (414, 514) de la machine continue respective et une deuxième borne d'entrée (438, 538) étant conçue pour être connectée électriquement à la troisième borne de circuit d'alimentation (7).

2. Dispositif de commande selon la revendication 1, dans lequel chaque machine continue (400, 500) est connectée par l'intermédiaire d'une quatrième borne de circuit d'alimentation (8, 9) respective à un module de commutation (200, 300) respectif.

3. Dispositif de commande selon l'une quelconque des revendications 1 et 2, dans lequel l'unité de redressement (430, 530) est conçue pour redresser un courant appliqué aux deux bornes d'entrée (436, 438, 536, 538).

4. Dispositif de commande selon la revendication 3, dans lequel l'unité de redressement de courant (430, 530) comprend un redresseur à pont de diodes comportant quatre diodes (431, 433, 435, 437, 531, 533, 535, 537).

5. Dispositif de commande selon l'une quelconque des revendications précédentes, dans lequel un commutateur de puissance (20) est configuré pour connecter la source de puissance de tension continue (6) avec le circuit d'alimentation en tension (2).

6. Dispositif de commande selon l'une quelconque des revendications précédentes, dans lequel un commutateur de champ (422, 522) et une résistance (424, 524) connectée en série au commutateur de champ (422, 522), sont connectés électriquement en parallèle avec l'enroulement inducteur (420, 520).

7. Dispositif de commande selon l'une quelconque des revendications précédentes, dans lequel les premier et deuxième commutateurs (110, 120) du premier module de commutation (100) et/ou les premier et deuxième commutateurs (210, 220) dudit au moins un deuxième module de commutation (200) sont des commutateurs à semi-conducteurs, en particulier des transistors bipolaires à grille isolée.

8. Dispositif de commande selon l'une quelconque des revendications 1 à 7, dans lequel les premier et deuxième modules de commutation (100, 200) sont formés par un module d'onduleur triphasé.

9. Dispositif de commande selon l'une quelconque des revendications précédentes, dans lequel les machines continues (400, 500) sont des machines de traction d'un véhicule de chemin de fer.

10. Dispositif de commande selon l'une quelconque des revendications précédentes, dans lequel une unité de commande (10) est conçue pour commander les premier et deuxième commutateurs (110, 120, 210, 220) des premier et deuxième modules de commutation (100, 200), en particulier pour mettre en oeuvre au moins l'une des machines continues (400, 500) dans une première direction de rotation et une deuxième direction de rotation opposée à la première direction de rotation.

11. Procédé pour mettre en oeuvre un dispositif de commande (1) selon l'une quelconque des revendications précédentes, dans lequel le procédé comprend les étapes :
- de fermeture du premier commutateur (210) dudit au moins un deuxième module de commutation (200, 300), et du deuxième commutateur (120) du premier module de commutation (100) par une unité de commande (10), et
- d'ouverture du deuxième commutateur (220) dudit au moins un deuxième module de commutation (200, 300) et du premier commutateur (110) du premier module de commutation (100) par une unité de commande (10) pour mettre en oeuvre au moins l'une des machines continues (400, 500) dans une première direction de rotation,
- de fermeture du deuxième commutateur (220) dudit au moins un deuxième module de commutation (200, 300), et d'un premier commutateur (110) du premier module de commutation (100) par une unité de commande (10), et
- d'ouverture du premier commutateur (210) dudit au moins un deuxième module de commutation (200, 300) et du deuxième commutateur (120) du premier module de commutation (100) par une unité de commande (10) pour mettre en oeuvre au moins l'une des machines continues (400, 500) dans une deuxième direction de rotation, la deuxième direction de rotation étant opposée à la première direction de rotation.

12. Véhicule de chemin de fer comprenant un dispositif de commande (1) selon l'une quelconque des revendications 1 à 10 comprenant au moins une machine continue (400, 500) connectée au dispositif de commande (1).
